# EUROPEAN PATENT SPECIFICATION

(11) **EP 1 020 717 B1**
(45) Date of publication and mention of the grant of the patent: **13.11.2002**
(21) Application number: 97935919.7
(22) Date of filing: 08.08.1997
(51) Int. Cl.: G01L 19/00, G01P 5/16, G01P 5/175, G01P 5/165, G01P 13/02

(54) **PITOT-STATIC PROBE**
PITOT-STATISCHE SONDE
SONDE PITOT-STATIQUE

(30) Priority: 12.08.1996 RU 96116536
(43) Date of publication of application: 19.07.2000
(73) Proprietor: State Unitary Enterprise "Central Aerohydrodynamic Institute named N.E. Zhukovsky", Zhukovsky, 140160 (RU); Kamov Company, Lubertsy, 140007 (RU); Aeropribor Voskhod JSCo, Moscow, 105318 (RU)
(72) Inventor: VOZHDAEV, Evgeny Semenovich, Moscow, 121165 (RU); GOLOVKIN, Vladimir Alexeevich, Zhukovsky, 140160 (RU); GOLOVKIN, Mikhail Alexeevich, Zhukovsky, 140160 (RU); EFREMOV, Andrei Alexandrovich, Zhukovsky, 140160 (RU); MIKHEEV, Sergei Viktorovich, Moscow, 103062 (RU); VAKULENKO, Anatoly Filippovich, Moscow, 105187 (RU); KASIYANIKOV, Veniamin Alexeevich, Moskovskaya obl. Lubertsy, 140013 (RU); YAKEMENKO, Grigory Vasilievich, Moskovskaya obl. Lubertsy, 140013 (RU); SUDAREV, Evgeny Vasilievich, Udelnaya, 140140 (RU); PANKRATOV, Anatoly Kuzmich, Moscow, 121352 (RU); KRAVTSOV, Vladimir Georgievich, Moscow, 117311 (RU); ALEXEEV, Nikolai Vasilievich, Moscow, 117593 (RU); NAZAROV, Oleg Ivanovich, Moscow, 107065 (RU)
(74) Representative: Sparing - Röhl - Henseler Patentanwälte
(86) International application number: RU9700252
(87) International publication number: WO98007014

(56) References cited:
- EP-A- 0 409 178
- GB-A- 1 298 848
- SU-A- 623 157
- SU-A- 1 045 130
- SU-A- 1 509 744
- SU-A- 1 543 266
- SU-A- 1 679 391
- SU-A- 1 809 341

## Description

### Field of the invention

The present invention relates to the Pitot-static probe and in particular to the determination of aircraft flight parameters and wind tunnel flow conditions.

### Background of the invention

Measuring flight parameters is one of the most important problems in aeromechanics and aircraft aerodynamics. It is highly topical for maneuverable airplanes owing to a notable increase in their angles of attack and speeds which range from low subsonic to high supersonic and include a sustained transonic condition, and is of paramount importance for helicopters with their high maneuverability (including the ability to fly in the fore-aft, right-left and up-down directions) and the need for automation of the aforesaid modes on the base of the air data computer system

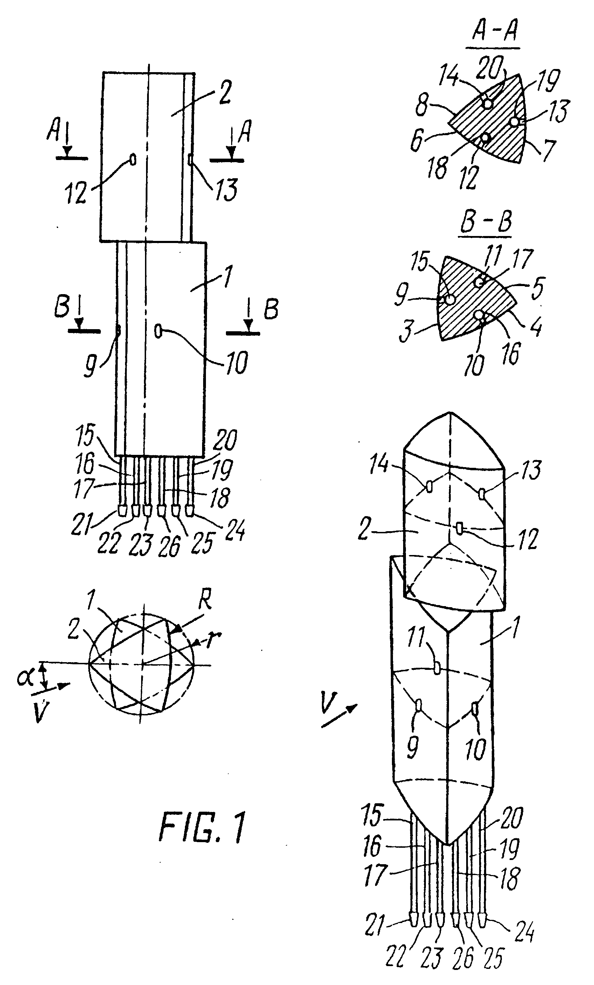

Known in the art is a Pitot-static probe comprising a cylindrical body with inlet orifices located around the circumference of its cross section and connected to a measuring system by means of air pressure pipes (see A.N. Petunin, "Methods and procedures for measuring gas flow parameters". - Mashinostroyeniye, Moscow, 1972, pp. 88-100, Fig. 1.102; and V.N. Glaznev, S.G. Zavarukhin, "Methods for experimental study of two-dimensional and axisymmetric whirl flows by means of a cylindrical pressure-tube for a wide Mach number range". - Uchenyye Zapiski TsAGI, vol. 14, no. 4, 1983). Flow parameters are determined with the help of this probe by measuring air pressure on its windward side (free from flow separation) and applying calibration formulae which correlate flow characteristics in interest with air pressure data.

The prior art probe has the following disadvantages:
- insufficient accuracy in determining static pressure in a flow with Mach number from 0.8 to 1.1 because of the known effect of transonic flow-pattern stabilization;
- inability to use for calibration the leeward orifices in the flow separation area owing to the fact that the pressure in said orifices, though unaffected by the transonic stabilization phenomenon, is nevertheless notably dependent on Reynolds number, surface roughness and flow turbulence intensity.

The most pertinent art is an air pressure probe made in the shape of two coaxial prisms with equal cross sections representing equilateral triangles. The aforesaid prisms are arranged at 60° in respect of one another and their lateral faces are provided with inlet orifices connected to a measuring system by means of pressure pipes with unions (see M.A. Golovkin, A.A. Yefremov, "Air pressure probe". - USSR author's certificate No. 1809341, filed on April 8, 1991).

The known apparatus has a disadvantage consisting in insufficient sensitivity and, consequently, insufficient accuracy in the determination of flight parameters.

### Summary of the Invention

It is an object of the present invention to improve the accuracy of measurement of flight/flow parameters by means of Pitot-static probes.

In accordance with this object the proposed Pitot-static probe is comprised of two co-axial bodies made in the shape of prisms with cross sections representing equilateral triangles with vertices located at an angle of 60° with respect to one another. The lateral faces of the aforesaid prisms have inlet orifices connected to a measuring system by means of pressure pipes with unions and are made convex with curvature radius R being determined from relationship R/r > 1 (r represents the radius of a circle drawn through the vertices of the prism section triangles). This shape of the Pitot-static probe makes it possible to minimize the influence of Reynolds number on pressure readings, on the one hand, and to enhance considerably the overall sensitivity of the apparatus (and, consequently, to reduce its measurement error) owing to a growth of the pressure derivative as a function of flow angularity, on the other hand.

### Description of the Drawings

Figure 1 presents a general view of the proposed Pitot-static probe.

Figure 2 presents a general view of the preferred embodiment of the invention.

Figure 3 illustrates variation of pressure coefficient p=(P-Pst)/q as a function of flow angularity within -180° to +180° in the proposed device (solid line) and in the prior art apparatus (dashed line). By P is denoted the orifice inlet pressure on one of the lateral faces of the upper or lower prism, Pst represents static pressure, and q stands for dynamic pressure.

Figure 4 illustrates instrument errors Δα and ΔV in the measurements of flow wash angle α and flow velocity V respectively at the pressure measurement error of 0.5 mm of water column. The experiment was carried out at a low value of air flow velocity V (15 m/s for both the proposed Pitot-static probe and the prior art apparatus).

### Detailed Description of the Preferred Embodiments

The disclosed Pitot-static probe comprises two co-axial bodies in the shape of prisms 1 and 2 whose cross sections represent equilateral triangles (rotated through 60° with respect to one another). Their lateral faces 3, 4, 5, 6, 7, and 8 are made convex, such that curvature radius R is larger than radius r of the circumcircle drawn through the vertices of the triangles representing the cross sections of prisms 1 and 2 (i.e., R/r > 1). The lateral faces of the bodies have inlet orifices 9, 10, 11, 12, 13, and 14 communicating with unions 21, 22, 23, 24, 25, and 26 through the agency of pipes 15, 16, 17, 18, 19, and 20.

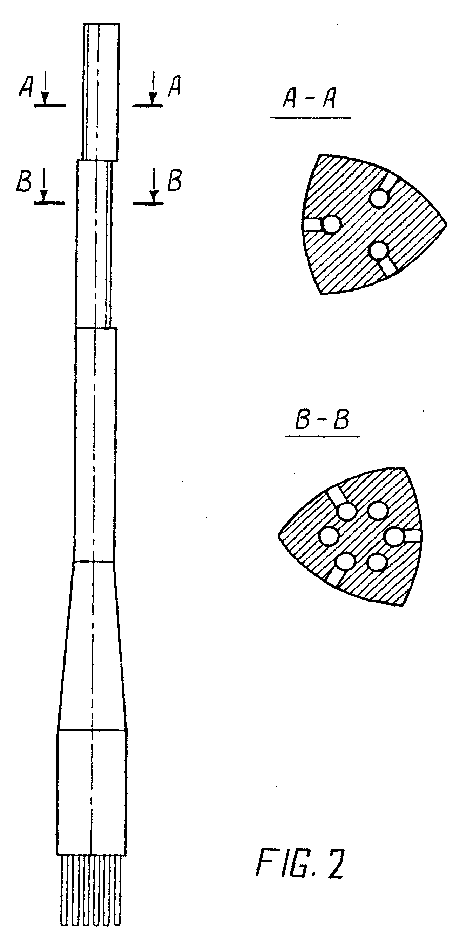

The dimensions of the preferable embodiment of the invention (see Fig. 2) were selected as optimal for its use in helicopters. The illustrated variant comprises tubular electric heaters for protection against icing.

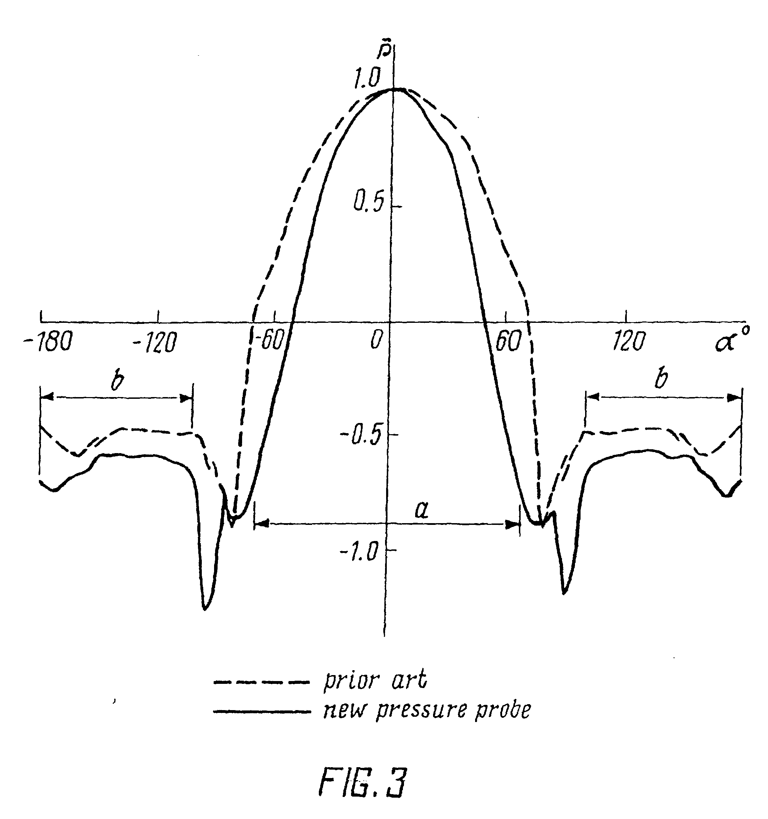

The Pitot-static probe operates as follows. Pressures taken by inlet orifices 9, 10, 11, 12, 13, and 14 are transferred through pipes 15, 16, 17, 18, 19, and 20 and measured by sensors connected to unions 21, 22, 23, 24, 25, and 26. The probe is calibrated for the standard range of variation of flow parameters. For calibration purposes account is taken of three groups of inlet pressure orifices: two groups on the windward side and one group on the leeward side (that is, in the areas denoted by letters "a" and "b" in Fig. 3). Given below are groups of pressure orifices used in different angularity ranges:

| Flow wash angles α, degrees | Groups of inlet pressure orifices | |
|---|---|---|
| | windward | leeward |
| 0 ≤ α < 60° | 9, 12 | 13 |
| 60° ≤ α < 120° | 12, 10 | 14 |
| 120° ≤ α < 180° | 10, 13 | 14 |
| 180° ≤ α < 240° | 13, 11 | 12 |
| 240° ≤ α < 300° | 11, 14 | 12 |
| 300° ≤ α < 360° | 14, 9 | 13 |

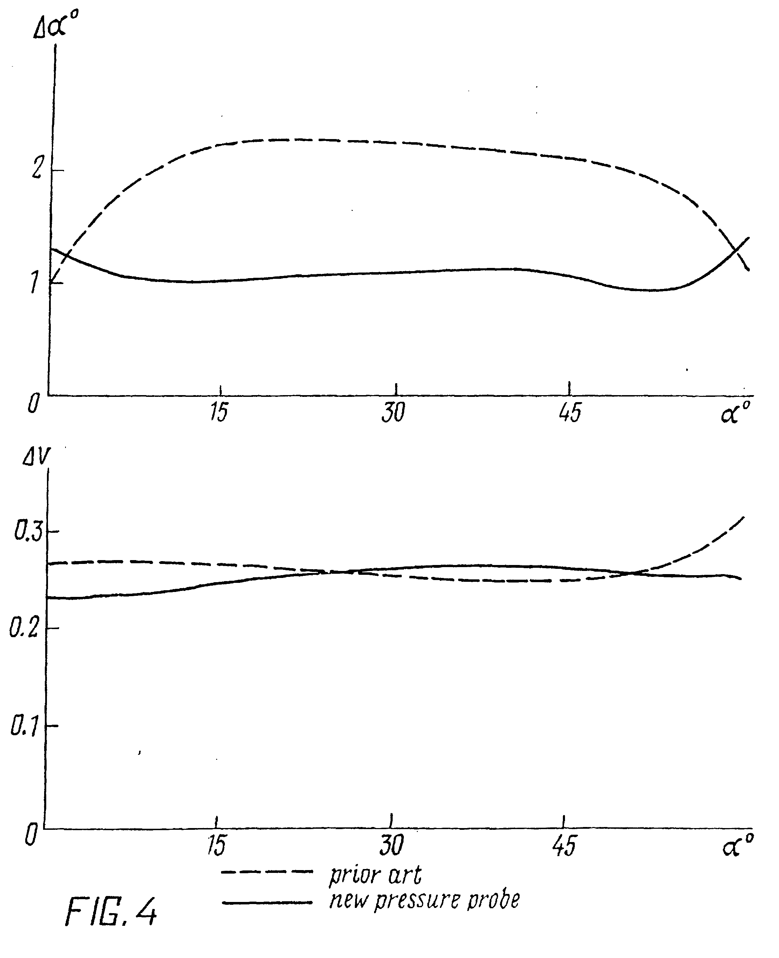

The selection of particular groups of orifices is based on the analysis of pressures taken by the orifices, the algorithm of selection reflecting the fact that windward orifice pressures are the highest. The airflow parameters are determined by calibration relationships. Since lateral faces 3, 4, 5, 6, 7, and 8 are convex, the ∂p/∂α pressure derivative as a function of the flow deflection angle on the windward faces of the proposed probe is greater than that on the prior art device within a considerable range (see Fig. 3). As a result, instrument error Δα in the evaluation of air flow deflection by the disclosed Pitot-static probe is approximately 50% less than in the prior art device, whereas the magnitude of errors ΔV in the evaluation of air flow velocity remains practically the same in both cases (Fig. 4).

The invention improves the accuracy of air flow deflection measurement over the entire operating range (α = 0 - 360°) irrespective of the velocity characteristic (that is, at subsonic, transonic, and supersonic speeds).

## Claims

1. A Pitot-static probe for determining air flow parameters, comprising two co-axial trihedral prisms with identical lateral faces, one of said prisms being arranged at 60° about its axis with respect to the other prism and said lateral faces being provided with inlet orifices communicated via air pressure channels with outlet unions located outside the airflow, **characterized in that** said lateral faces are made convex with curvature radius R being determined from relationship R/r > 1, where r represents the radius of a circle drawn through the vertices of the prism cross section.

## Patentansprüche

1. Staudruck-Sonde für die Bestimmung von Luftdurchflußparametern, die zwei koaxiale dreiflächige Prismen mit gleichen Seitenflächen umfaßt, wobei eines der Prismen in bezug auf das andere Prisma um 60° um seine Achse gedreht angeordnet ist und wobei die Seitenflächen mit Einlaßöffnungen versehen sind, die über Luftdruckkanäle mit außerhalb der Luftströmung befindlichen Auslaßvereinigungen in Verbindung stehen, **dadurch gekennzeichnet, daß** die Seitenflächen konvex ausgebildet sind und der Krümmungsradius R durch die Beziehung R/r > 1 bestimmt ist, wobei r den Radius eines Kreises angibt, der durch die Scheitelpunkte des Prismenquerschnitts verläuft.

## Revendications

1. Tube de Pitot pour la détermination des paramètres d'écoulement d'air, comprenant deux prismes triédriques coaxiaux à face latérales identiques, l'un des prismes étant disposé avec son axe à 60° par rapport à l'autre prisme et lesdites faces latérales étant munies d'orifices internes en communication par l'intermédiaire de conduits de pression d'air avec des embouts de sortie situés hors de l'écoulement d'air, **caractérisé en ce que** lesdites faces latérales sont convexes et présente un rayon de courbure R déterminé par la relation R/r > 1, où r représente le rayon d'un cercle reliant les arêtes des primes en coupe.
